# EUROPEAN PATENT SPECIFICATION

(11) **EP 2 373 577 B1**
(45) Date of publication and mention of the grant of the patent: **10.09.2014**
(21) Application number: 09775480.8
(22) Date of filing: 15.12.2009
(51) Int. Cl.: C01B 9/08, C01B 33/107, B01J 8/24, B01J 8/00

(54) **PROCESSES AND SYSTEMS FOR PRODUCING SILICON TETRAFLUORIDE FROM FLUOROSILICATES IN A FLUIDIZED BED REACTOR**
VERFAHREN UND SYSTEME ZUR HERSTELLUNG VON SILICIUMTETRAFLUORID AUS FLUORSILICATEN IN EINEM WIRBELSCHICHTREAKTOR
PROCÉDÉS ET SYSTÈMES POUR PRODUIRE UN TÉTRAFLUORURE DE SILICIUM À PARTIR DE FLUOROSILICATES DANS UN RÉACTEUR À LIT FLUIDISÉ

(30) Priority: 17.12.2008 US 138158 P; 17.12.2008 US 138160 P
(43) Date of publication of application: 12.10.2011
(73) Proprietor: MEMC Electronic Materials, Inc., St. Peters, MO 63376 (US)
(72) Inventor: BHUSARAPU, Satish, St. Peters, Missouri 63376 (US); GUPTA, Puneet, St. Peters, Missouri 63376 (US)
(74) Representative: Maiwald Patentanwalts GmbH
(86) International application number: PCT/US2009/068103
(87) International publication number: WO 2010/077880

(56) References cited:
- CN-A- 101 481 113
- GB-A- 1 239 646
- US-A- 4 716 856
- US-A- 4 748 014
- US-A- 5 634 516

## Description

### BACKGROUND

The field of the invention relates generally to preparation of silicon tetrafluoride and, more particularly, to the thermal decomposition of an alkali or alkaline earth-metal fluorosilicate to silicon tetrafluoride and an alkali or alkaline earth-metal fluoride in a fluidized bed reactor.

Silicon tetrafluoride is a versatile gas that may be used as a precursor in the production of silane. Silane is a valuable feedstock for production of polycrystalline silicon which is used to produce semiconductors and solar cells. Silicon tetrafluoride may also be used for, for example, ion implantation, plasma deposition of fluorinated silica and as a metal silicide etch.

Silicon tetrafluoride has conventionally been prepared by thermally decomposing an alkali or alkaline earth-metal fluorosilicate such as, for example, sodium fluorosilicate. Fluorosilicates may be prepared by reacting fluorosilicic acid with an alkali or alkaline earth-metal hydroxide, carbonate or salt (e.g., NaCl). Fluorosilicic acid may be prepared as a by-product in the manufacture of phosphate fertilizers or by the reaction of sulfuric acid with barium hexafluorosilicate, apatite or fluorspar.

GB 1 239 646 describes a process for decomposing sodium fluorosilicate into silicon tetrafluoride and sodium fluoride in a turbulent stream of inert gas.

US 4,716,856 describes a apparatus and process utilizing a circulating fluidized bed system which is especially suitable for the combustion of carbonaceous materials.

US 5,634,516 describes a method and apparatus for cooling hot gas in a reactor which is provided with a chamber encompassing a bubbling fluidized bed.

One of the conventional methods to prepare silicon tetrafluoride gas involves the thermal decomposition of fluorosilicates by heating the fluorosilicate in a kiln to produce silicon tetrafluoride gas and an alkali or alkaline earth-metal fluoride as described in U.S. Patent No. 5,242,670. Such processes typically provide poor heat transfer to the fluorosilicate material resulting in excessive energy use and often require the addition of silicon dioxide or aluminum trioxide to prevent the fluoride residue from agglomerating into a solid block of residue as described in JP 10-231114. The use of silicon or aluminum oxides renders the residue commercially unfit for recycle because the residue becomes a mixture of unreacted silicon oxide or aluminum oxide and the fluoride salt. The impurities in the residue mixture cause much lower yields of recycled products. Accordingly, such residue mixtures are typically disposed of by landfill application rather than by recycle. A need exists for processes and systems for producing silicon tetrafluoride from fluorosilicates that efficiently transfer heat to the fluorosilicate material and that produce by-products that may suitably be recycled.

### SUMMARY

One aspect of the present invention is directed to a process for preparing silicon tetrafluoride by the thermal decomposition of an alkali or alkaline earth-metal fluorosilicate in a fluidized bed reactor of the bubbling bed type. The fluidized bed reactor includes a reaction chamber. Fluorosilicate and a fluid media are introduced into the reaction chamber. The fluorosilicate is suspended within the fluid media in the reaction chamber. The temperature of at least a portion of the reaction chamber is maintained above 400°C to thermally decompose at least a portion or all of the fluorosilicate and produce silicon tetrafluoride. The silicon tetrafluoride is then discharged from the reaction chamber.

A further aspect of the present invention is directed to a system for preparing silicon tetrafluoride by the thermal decomposition of an alkali or alkaline earth-metal fluorosilicate. The system includes a fluidized bed reactor of the bubbling bed type having a reaction chamber for thermal decomposition of fluorosilicate into silicon tetrafluoride gas and an alkali or alkaline earth-metal fluoride. A heater apparatus is in thermal communication with the reaction chamber. An exhaust gas treatment system treats gases discharged from the fluidized bed reactor. The exhaust gas treatment system includes a particulate separator in fluid communication with the fluidized bed reactor for removing alkali or alkaline earth-metal fluoride from the gases discharged from the fluidized bed reactor.

Various refinements exist of the features noted in relation to the above-mentioned aspects of the present invention. Further features may also be incorporated in the above-mentioned aspects of the present invention as well. These refinements and additional features may exist individually or in any combination. For instance, various features discussed below in relation to any of the illustrated embodiments of the present invention may be incorporated into any of the above-described aspects of the present invention, alone or in any combination.

### BRIEF DESCRIPTION OF THE DRAWINGS

Figure 1 is schematic of a fluidized bed reactor including the flows entering and exiting the reactor;
Figure 2 is a flow diagram of a system for producing silicon tetrafluoride by the thermal decomposition of an alkali or alkaline earth-metal fluorosilicate according to a first embodiment of the present invention; and
Figure 3 is a flow diagram of a system for producing silicon tetrafluoride by the thermal decomposition of an alkali or alkaline earth-metal fluorosilicate according to a second embodiment of the present invention.

### DETAILED DESCRIPTION

Provisions of the present invention include processes for preparing silicon tetrafluoride by the thermal decomposition of an alkali or alkaline earth-metal fluorosilicate in a fluidized bed reactor of the bubbling type. A portion of silicon tetrafluoride that is generated in the decomposition reaction may be recycled to the reactor and used to suspend the fluorosilicate material. Alkali or alkaline earth-metal fluoride residue generated in the decomposition reaction may be discharged from the reactor and reacted with fluorosilicic acid to produce an alkali or alkaline earth-metal fluorosilicate that may be introduced to the reactor for further generation of silicon tetrafluoride.

Alkali and alkaline earth-metal fluorosilicates thermally decompose to produce silicon tetrafluoride and an alkali or alkaline earth-metal fluoride as follows,

MₓSiF₆ → SiF₄ + XMF_{2/x},

wherein M is an alkali or alkaline earth-metal and x is 2 when M is an alkali and x is 1 when M is an alkaline earth-metal. Embodiments of processes of the present invention include introducing an alkali and/or alkaline earth-metal fluorosilicate (often referred to herein as "fluorosilicate") and fluid media into the reaction chamber of a fluidized bed reactor of the bubbling type. The fluorosilicate becomes suspended within the fluid media in the reaction chamber. The temperature of at least a portion of the reaction chamber is maintained above the temperature at which the fluorosilicate decomposes, typically above a temperature of 400°C, to thermally decompose the fluorosilicate and produce silicon tetrafluoride gas and alkali and/or alkaline earth-metal fluoride. Silicon tetrafluoride is discharged from the reaction chamber and may be subjected to further processing steps including, for example, recycling of silicon tetrafluoride by introducing a portion or all of the discharged alkali and/or alkaline earth-metal fluoride to the reaction chamber. The recycled silicon tetrafluoride acts as the fluid media in which the fluorosilicate is suspended. Other processing steps may be performed in accordance with embodiments of the present invention, including, for example, drying of the fluorosilicate feed and the removal of particulate and/or water vapor from the silicon tetrafluoride decomposition product.

### Fluorosilicate Feed

The fluorosilicate feed is an alkali or alkaline earth-metal fluorosilicate. Suitable alkali or alkaline earth-metal fluorosilicates include, for example, lithium fluorosilicate, sodium fluorosilicate, potassium fluorosilicate, magnesium fluorosilicate, barium fluorosilicate, calcium fluorosilicate and mixtures thereof. In view of the wide availability of sodium feedstocks such as caustic soda and potash that may be economically reacted with fluorosilicic acid, a by-product produced in the manufacture of phosphate fertilizers, to produce sodium fluorosilicate, sodium fluorosilicate is an especially preferred feedstock.

The fluorosilicate feedstock may contain any amount of impurities in accordance with embodiments of the present invention as the impurities typically stay in the solid phase and do not enter the product gas. In some embodiments, the fluorosilicate feedstock includes less than 2% impurities by weight on a dry basis, i.e., contains less than 2% by weight compounds other than alkali or alkaline earth-metal fluorosilicates and moisture; however, fluorosilicates containing any amount of impurities may be used without departing from the scope of the present invention. In another embodiment, the fluorosilicate feedstock includes less than about 1 % impurities by weight on a dry basis. If desired, the amount of impurities in fluorosilicates may be removed by, for example, contacting the fluorosilicate material with an absorbent that selectively absorbs the impurities.

In some embodiments, the average nominal diameter of the fluorosilicate particles is less than 500 µm and, in other embodiments, from 25 µm to 500 µm and even from 80 µm to 250 µm. Commercially sold fluorosilicate typically contains fluorosilicate particles in these particle size ranges and particle size reduction is not typically required. However, if feedstocks with larger particle sizes are used, the particle size of the fluorosilicate may be reduced by conventional methods such as, for example, by grinding or milling the fluorosilicate.

Fluorosilicate solids fed to the fluidized bed reactor may contain less than about 3% by weight moisture, less than 2% by weight moisture, less than 1% by weight moisture and even less than 0.1% by weight moisture. While fluorosilicates containing higher moisture concentrations may be used without departing from the scope of the present invention, fluorosilicates that contain higher amounts of moisture may agglomerate into clumps that are difficult to heat and decompose and that are difficult to suspend in the reactor. Silicon tetrafluoride product may further react with the moisture to produce undesirable hydrogen fluoride and fluorodisiloxanes which can cause enhanced corrosion of the reaction chamber (which may be made of, for example, heat resistant austenitic stainless steel).

According to some embodiments of the present invention, moisture may be removed from the fluorosilicate feed by introducing the fluorosilicate material into a drying apparatus prior to introduction into the fluidized bed reactor. The drying apparatus may be an indirect dryer such as, for example, a rotary dryer or a drum dryer or may be a direct dryer such as, for example, a fluidized bed dryer, a belt dryer or a vacuum dryer. The drying apparatus and the fluidized bed reactor may be combined into one unit (i.e., drying and thermal decomposition occur in the same volume of the device); however, it is preferred that any drying of fluorosilicate material occur before introduction of the fluorosilicate material into the fluidized bed reactor to improve process selectivity toward silicon tetrafluoride and to reduce the amount of by-products in the silicon tetrafluoride product gas.

It should be noted that in embodiments wherein the drying apparatus and the fluidized bed reactor are combined into one unit (i.e., drying and thermal decomposition occur in the same volume of the device), the temperature and/or ambient gases may be varied throughout the unit such that the temperature and/or ambient gas in one or more regions of the apparatus favor drying the fluorosilicate; whereas, the temperature and/or ambient gases in other region(s) favor the decomposition of the fluorosilicate. If such multi-region designs are commercially impractical, the temperature and/or ambient gas in the fluidized bed reactor may be switched to a batch mode in which fluorosilicate feed is dried in a first step at different temperature and ambient gas conditions.

Preferably, an ambient comprising an inert gas is circulated through the drying apparatus to remove evaporated water vapor and help drive removal of moisture from the fluorosilicate feedstock. Suitable inert gases include, for example, nitrogen, helium and argon. In some embodiments, an ambient comprising air depleted in moisture is circulated through the drying apparatus. Water vapor may be removed from air by, for example, utilizing a chiller apparatus. The ambient and water vapor may be driven or pulled though the drying apparatus by a recirculation fan or blower. Preferably, water vapor and the ambient (collectively "effluent gas") discharged from the drying apparatus are introduced into a particulate separator for removing particulates, namely fluorosilicate dust, entrained in the effluent gas. Suitable particulate separators include, for example, bag filters, cyclonic separators and liquid scrubbers. Fluorosilicate dust may be recycled back to the drying apparatus or, more preferably, to the fluidized bed reactor.

The effluent gas may be introduced into a vapor separator, such as, for example, a mist eliminator or a liquid scrubber, to remove water vapor. One example of a liquid scrubber is a venturi scrubber in which water vapor is atomized. In some embodiments, the particulate separator and the vapor separator are one unit (i.e., particulate and water vapor are removed from the effluent gas in the apparatus). In some embodiments, water vapor in the effluent gas is first atomized to produce water particles that impact the particulate. The particulate-incorporating water particles may be removed in a cyclonic separator. The particulate and water vapor may be removed from the effluent gas in any sequence without departing from the scope of the present invention. Effluent gas, preferably depleted in water vapor and depleted in particulate, may be recycled to the drying apparatus.

### Fluidized Bed Reactor

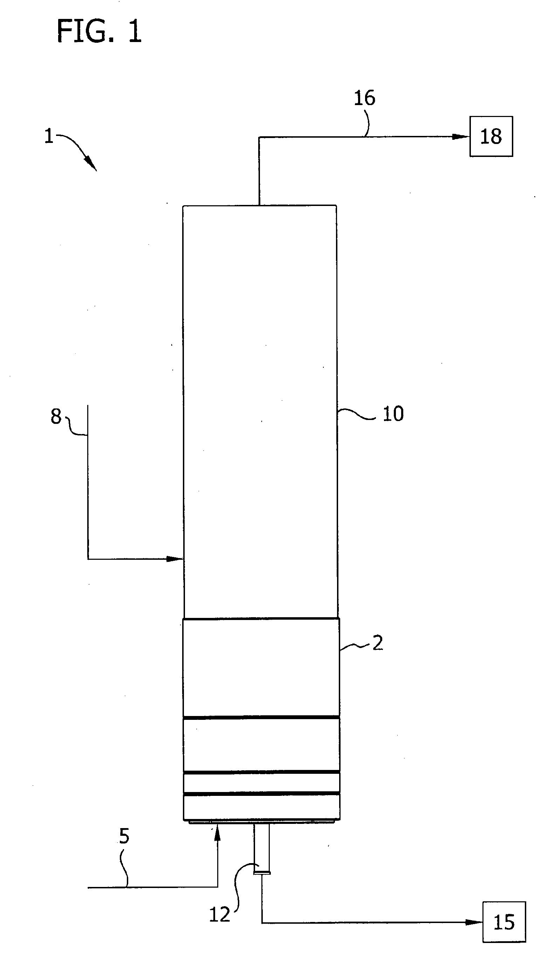

Fluorosilicate feed and fluid media are introduced into a fluidized bed reactor to suspend the fluorosilicate in the fluid media and thermally decompose the fluorosilicate to produce silicon tetrafluoride and a fluoride residue. Referring now to Fig. 1, a fluidized bed reactor suitable for use in accordance with embodiments of the present invention is generally designated as 1. The reactor 1 includes a reaction chamber 10 and a gas distribution unit 2. The reaction chamber 10 is typically a fluidized bed in which fluorosilicate particles are suspended by an upward flow of fluid media, typically a fluidizing gas, in the reactor. Fluidized bed reactors provide high mass transfer and heat transfer rates between decomposing fluorosilicate particles and the gas phase which enhances the decomposition rate of the fluorosilicate particles.

The fluidized bed reactor 1 may be characterized by a number of configurations acceptable to fluidized bed operations. The fluidized bed reactor is a bubbling bed type reactor. Regardless of the mode of operation, the fluidized bed reactor may generally be a cylindrical vertical vessel. All reactor designs may include particulate separation unit(s) such as, for example, cyclonic separators, immediately after the bed. The particular dimensions of the reactor will be primarily dependent upon system design factors that may vary from system to system such as the desired system output, heat transfer efficiencies and system fluid dynamics, without departing from the scope of the present invention.

The fluidizing gas 5 is introduced into the distribution unit 2 to evenly distribute the fluidizing gas into the inlet of the reaction chamber 10. The distribution unit 2 helps evenly distribute the fluidizing gases throughout the reaction chamber 10 to maximize the rate of decomposition of fluorosilicate material. Uniform fluidization also helps to prevent agglomeration and fusing of the fluorosilicate feed to the by-product residue.

Fluorosilicate material 8 may be introduced into the reaction chamber 10 pneumatically, by use of a hopper and rotary airlock or by use of a vibratory feeder. Preferably, the fluorosilicate material is added continuously to the reaction chamber 10 to keep the bed well mixed to prevent the alkali or alkaline earth-metal fluoride by-product from agglomerating. A well-mixed bed also prevents the formation of hot spots within the reaction chamber 10. Hot spots above a temperature of the eutectic point may result in eutectic formation of a fused liquid paste of fluorosilicate and the fluoride by-product. The formation of this eutectic mixture may cause the distribution unit and/or the product discharge to plug requiring the reactor to be taken offline and cleaned. The eutectic point may vary with the composition of materials in the reaction chamber and may be readily determined by those skilled in the art. Generally and according to some embodiments of the present disclosure, the eutectic point is 695°C. Still higher hot spot temperatures may cause the fluoride by-product to melt causing additional unnecessary reactor down-time. In other embodiments, a batch system may be used in which fluorosilicate feed material is introduced into one or more reaction chamber(s) 10 intermittently. Depending on design considerations, the fluorosilicate material 8 may be added to the top, bottom or middle portion of the reaction chamber 10.

During operation of the fluidized bed reactor 1, the fluidizing gas velocity through the reaction zone is maintained above the minimum fluidization velocity of the fluorosilicate particles. The gas superficial velocity through the reaction chamber 10 near the distribution unit 2 is generally maintained at a velocity of from one to eight times the minimum fluidization velocity necessary to fluidize the particles within the fluidized bed. In some embodiments, the gas velocity is from two to five times, and in at least one embodiment is four times the minimum fluidization velocity necessary to fluidize the particles within the fluidized bed. The minimum fluidization velocity varies depending on the properties of the gas and particles involved. The minimum fluidization velocity may be determined by conventional means (see, for example, p. 17-4 of Perry's Chemical Engineers' Handbook, 7th. Ed.).

The minimum fluidization velocity is preferably calculated for conditions as they exist near the distribution unit 2. Using these conditions, which include temperatures that are normally cooler than the rest of the reactor, it is possible to ensure the minimum fluidization velocity calculated be sufficient to fluidize the entire bed. At elevated temperatures above the distribution unit, the viscosity and density variables are heat sensitive and may result in a minimum fluidization velocity that is not sufficient to fluidize the bed at the cooler temperatures of the lower portions of the bed. Therefore, by calculating a minimum fluidization velocity based on the cooler conditions, it is possible to ensure the calculation of the lowest fluidization velocity that will fluidize the entire bed. Although the present invention is not limited to specific minimum fluidization velocities, minimum fluidization velocities useful in the present invention range from 0.1 cm/sec to 20 cm/sec or even from 0.5 cm/sec to 5 cm/sec.

Gas velocities higher than the minimum fluidization flow rate are often desired to achieve higher productivities. As the gas velocity increases beyond the minimum fluidization velocity the excess gas forms bubbles, increasing the bed voidage. The bed can be viewed to consist of bubbles and 'emulsion' containing gas in contact with fluorosilicate particles. The quality of the emulsion is quite similar to the quality of the bed at the minimum fluidization condition. The local voidage in the emulsion is close to the minimum fluidization bed voidage. Hence, bubbles are generated by the gas introduced in excess of what is required to achieve the minimum fluidization. As the ratio of actual gas velocity divided by the minimum velocity increases, the bubble formation intensifies. Under gas velocities higher than the minimum fluidization flow rate, the particles are rapidly heated to the temperature of the decomposition reaction and silicon tetrafluoride gas is rapidly removed from the reaction chamber. The concentration of silicon tetrafluoride gas in the vicinity of the particles significantly impacts the rate of formation of the silicon tetrafluoride gas.

Typically, extraneous heat is used to cause the temperature of the fluorosilicate particles to increase to the point at which they decompose. Methods for heating include, for example, capacitive heating, induction coils (RF) and electrical resistance elements. In some embodiments, the fluidizing gas is heated prior to introduction into the reaction chamber 10. Upon introduction into the reaction chamber 10, the fluidizing gas transfers heat to the particles causing them to thermally decompose. In some embodiments, both extraneous addition of heat and pre-heating of the fluidizing gas are employed.

The temperature in the reaction chamber 10 is preferably maintained above the temperature at which the fluorosilicate material decomposes to produce silicon tetrafluoride and an alkali or alkaline earth-metal fluoride. The temperature of the reaction chamber 10 is maintained above 400°C, typically from 400°C to 800°C, from 400°C to 750°C and even from 500°C to 695°C. Preferably, the temperature in the reaction chamber 10 is maintained below the temperature at which the fluorosilicate and fluoride residue form a eutectic mixture (often 695°C) and below the melting temperature of the alkali or alkaline earth-metal fluoride.

Because the decomposition reaction is a reversible reaction and the degree of thermal decomposition is dependent, in part, upon the pressure in the reactor, the pressure (absolute) in the reactor (as measured above the reactor at the point at which exhaust gas 16 exits the reaction chamber) may preferably be maintained below 1 bar. In another embodiment, the pressure is maintained from 0.001 bar to 1 bar. In other embodiments, the pressure is maintained from 0.001 bar to 0.9 bar, from 0.001 bar to 0.5 bar, from 0.001 bar to 0.1 bar or even from 0.001 bar to 0.01 bar.

The alkali or alkaline earth-metal fluorosilicate material decomposes to produce silicon tetrafluoride gas and alkali or alkaline earth-metal fluoride residue. The residue is typically a powder and may be withdrawn from the reaction chamber through a gravity drop (not shown) at the base of the reaction chamber, through a by-product withdrawal tube 12 and to fluoride residue storage 15. In another embodiment, the residue exits the reaction chamber 10 with the silicon tetrafluoride exhaust gas 16 and is separated from the gas by a particulate separator such as, for example, a cyclonic separator. Preferably the residue is removed continuously from the reaction chamber 10; however, the residue may be removed intermittently (i.e., by batch-wise methods) without departing from the scope of the present invention. Preferably, the average period of time between introduction of a fluorosilicate particle into the reaction chamber 10 and discharge of the corresponding fluoride residue produced as a by-product of the thermal decomposition of the fluorosilicate particle is from 5 minutes to 50 minutes or from 10 minutes to 30 minutes.

It should be noted that any reactor capable of carrying out the above described processes may be used without departing from the scope of the present invention. Such reactors are generally described as fluidized bed reactors of the bubbling bed type. Furthermore, the process of the present invention may carry out the reaction in a single fluidized bed reactor of the bubbling bed type or may incorporate one or more fluidized bed reactors of the bubbling bed type configured in series and/or in parallel.

### Exhaust Treatment

The fluidizing gas and the silicon tetrafluoride gas produced as a decomposition product (collectively "exhaust gas") 16 exit the reactor chamber 10 and may be introduced into further processing units 18. The exhaust gas may be driven or pulled though the fluidized bed reactor by a recirculation fan or blower. The exhaust gas may be introduced into a particulate separator for removing alkali or alkaline earth-metal fluoride or fluorosilicate dust entrained in the exhaust gas. Suitable particulate separators include, for example, ceramic and metallic dust filters and cyclonic separators. Fluoride removed from the exhaust gas may be disposed of or recycled as described more fully below. In some embodiments, particulate removed from the exhaust gas is recycled back to the fluidized bed reactor 1.

Exhaust gas may be introduced into a vapor separator, such as, for example, a condenser trap that cools the exhaust gas and condenses and removes any water vapor and any hydrogen fluoride present in the gas. The particulate and water vapor may be removed in any sequence without departing from the scope of the present invention. Exhaust gas, preferably depleted in water vapor and depleted in particulate, may be withdrawn from the system as a product gas. The product gas may be stored as a solid at liquid nitrogen temperatures or as a pressurized gas. A portion of the exhaust gas may be recycled to the fluidized bed reactor as the fluidizing gas.

Preferably the fluidizing gas used in the fluidized bed reactor is a portion of the silicon tetrafluoride gas discharged from the reactor. However, other fluidizing gases may be used such as inert gases including, for example, nitrogen, helium and argon, without departing from the scope of the present invention. If a fluidizing gas other than silicon tetrafluoride is used in the reaction chamber, silicon tetrafluoride in the exhaust gas is preferably separated from the fluidizing gas for product recovery. Separation techniques include, for example, adsorption, membrane separation and distillation.

### Alkali and Alkaline Earth-Metal Fluoride Treatment

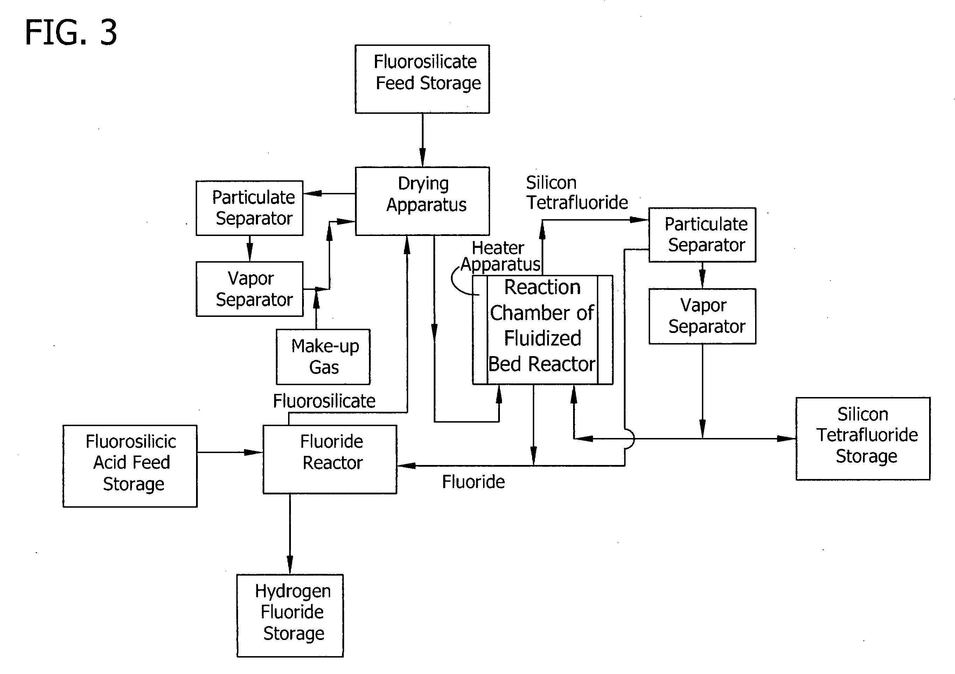

The alkali or alkaline earth-metal fluoride residue withdrawn from the reactor may be collected as a product or, more preferably, further processed and recycled to the reaction chamber 10. The fluoride residue may be reacted with fluorosilicic acid to produce an alkali or alkaline earth-metal fluorosilicate as follows,

XMF_{2/x} + H₂SiF₆ → MₓSiF₆ + 2HF,

wherein M is an alkali or alkaline earth-metal and x is 2 when M is an alkali and x is 1 when M is an alkaline earth-metal. Alkali or alkaline earth-metal fluoride may be added directly to liquid fluorosilicic acid to produce a supernatant liquid containing hydrogen fluoride and unreacted alkali or alkaline earth-metal fluoride and fluorosilicic acid and precipitated fluorosilicate. The precipitated fluorosilicate may be separated from the supernatant liquid and introduced into the reaction chamber 10 of the fluidized bed reactor 1. Preferably the fluorosilicate is purified and dried prior to introduction into the fluidized bed reactor 1. The fluorosilicate material may be introduced into the drying apparatus used to dry fluorosilicate feed material as shown in Figure 3. The hydrogen fluoride supernatant may be purified and collected as a product or utilized to produce additional silicon tetrafluoride. The hydrogen fluoride may be reacted with silicon oxide to produce additional silicon tetrafluoride as follows,

4HF + SiO₂ → SiF₄ + 2H₂O.

### System for Preparing Silicon Tetrafluoride

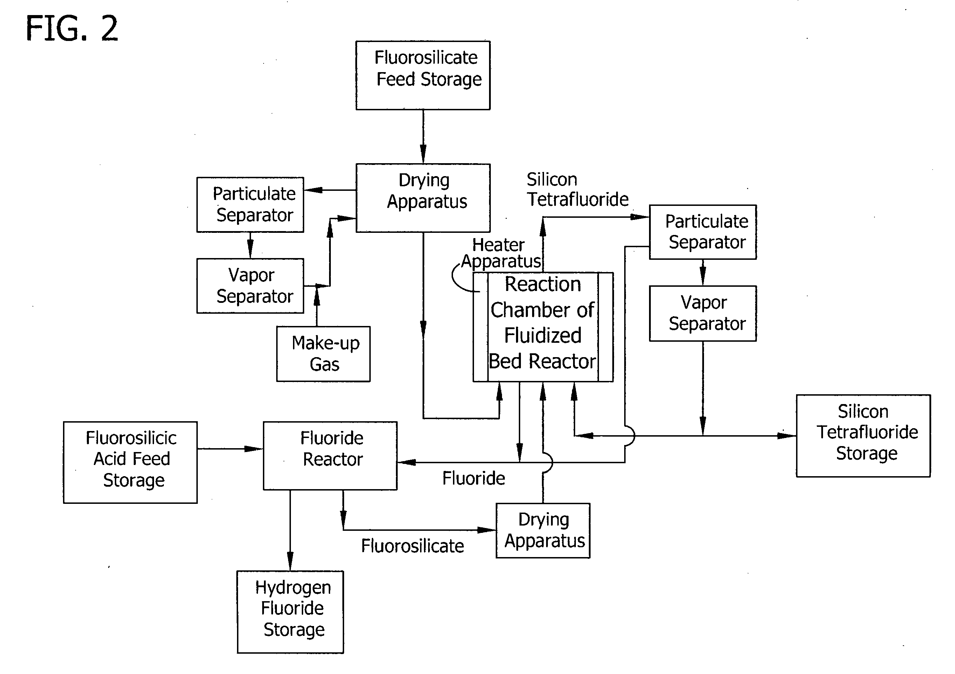

The processes of the present invention may be carried out in a system for producing silicon tetrafluoride such as, for example, the system shown in Figure 2 or the system shown in Figure 3. The system includes alkali or alkaline earth-metal feed storage ("fluorosilicate feed storage"). The fluorosilicate feed is conveyed by a conveying apparatus to a drying apparatus for removing moisture from the fluorosilicate feed. An effluent gas from the drying apparatus containing water vapor removed from the fluorosilicate feed is introduced to an effluent gas treatment system that includes a particulate separator and a vapor separator. The particulate separator separates fluorosilicate dust from an effluent gas recirculated throughout the drying apparatus. A vapor separator removes water vapor generated in the drying apparatus. The particulate and water vapor may be removed from the effluent gas in any sequence without departing from the scope of the present invention. A make-up gas comprising an inert gas such as, for example, nitrogen, helium and argon, or optionally moisture-depleted air may be fed to the effluent gas treatment system. A conveying apparatus conveys fluorosilicate feed from the drying apparatus to a fluidized bed reactor of the bubbling bed type that includes a reaction chamber for thermal decomposition of fluorosilicate into silicon tetrafluoride gas and an alkali or alkaline earth-metal fluoride. The system includes a heater apparatus in thermal communication with the reaction chamber.

The exhaust gas produced in the fluidized bed reactor is introduced into an exhaust gas treatment system that includes a particulate separator in fluid communication with the fluidized bed reactor for removing alkali or alkaline earth-metal fluoride and/or fluorosilicate dust from the gases discharged from the fluidized bed reactor. The exhaust gas treatment system may also include a vapor separator for condensing and removing water vapor from the gases discharged from the fluidized bed reactor. The particulate and water vapor may be removed from the effluent gas in any sequence without departing from the scope of the present invention. The system may include a silicon tetrafluoride product storage system. A conveying apparatus transfers a portion of the silicon tetrafluoride gas discharged from the fluidized bed reactor back to the fluidized bed reactor as a fluidizing gas.

The system may include a fluoride treatment system comprising a fluoride reactor. A conveying apparatus conveys alkali or alkaline earth-metal fluoride discharged from the particulate separator (or alternatively or in addition discharged from the fluidized bed reactor) to the fluoride reactor. Fluorosilicic acid is reacted with an alkali or alkaline earth-metal fluoride in the fluoride reactor to produce alkali or alkaline earth-metal fluorosilicate. Fluorosilicate material discharged from the fluoride reactor may be conveyed by a conveying apparatus to the fluidized bed reactor. The fluorosilicate material may be purified (not shown) and/or dried in a drying apparatus as shown in Figure 2 prior to introduction into the fluidized bed reactor. The drying apparatus may be the same drying apparatus used to dry fluorosilicate feed material as shown in Figure 3.

Suitable conveying apparatus are conventional and well known in the art. Suitable conveying apparatus for the transfer of gases include, for example, a recirculation fan or blower and suitable conveying apparatus for transfer of solids include, for example, drag, screw, belt and pneumatic conveyors.

Preferably, all equipment utilized in the system for producing silicon tetrafluoride is resistant to corrosion in an environment that includes exposure to acidic compounds and, more particularly, exposure to fluorine-containing compounds including, for example, silicon tetrafluoride, alkali or alkaline earth-metal fluoride, silicon tetrafluoride and hydrogen fluoride. Suitable materials of construction are conventional and well-known in the field of the invention and include, for example, austenitic stainless steel, MONEL alloys, INCONEL^{®} alloys, HASTELLOY^{®} alloys and nickel.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

## Claims

1. A process for preparing silicon tetrafluoride by the thermal decomposition of an alkali or alkaline earth-metal fluorosilicate in a fluidized bed reactor of the bubbling bed type, the fluidized bed reactor comprising a reaction chamber, the process comprising:
introducing fluorosilicate and a fluid media into the reaction chamber;
suspending the fluorosilicate within the fluid media in the reaction chamber;
maintaining the temperature of the reaction chamber above 400°C to thermally decompose the fluorosilicate and produce silicon tetrafluoride; and
discharging silicon tetrafluoride from the reaction chamber.

2. A process as set forth in claim 1 wherein the fluid media comprises silicon tetrafluoride gas.

3. A process as set forth in claim 1 or claim 2 wherein a portion of the discharged silicon tetrafluoride is introduced into the reaction chamber to suspend fluorosilicate in the reaction chamber.

4. A process as set forth in any one of claims 1 to 3 wherein the fluorosilicate decomposes to produce an alkali or alkaline earth-metal fluoride.

5. A process as set forth in claim 4 wherein the reaction chamber is maintained below the melting temperature of the alkali or alkaline earth-metal fluoride.

6. A process as set forth in any one of claims 1 to 5 wherein the fluorosilicate is a powder comprising powder particles, the average nominal diameter of the powder particles being from 25 µm to 500 µm.

7. A process as set forth in claim 6 wherein the fluorosilicate powder particles decompose to produce silicon tetrafluoride gas and a solid residue of alkali or alkaline earth-metal fluoride, the fluoride residue being discharged from the reaction chamber, the average period of time between introduction of a fluorosilicate powder particle into the reaction chamber and discharge of the corresponding fluoride residue being from 5 minutes to 50 minutes.

8. A process as set forth in claim 7 wherein the fluoride residue is discharged from the reaction chamber with the silicon tetrafluoride discharged from the reaction chamber and wherein the fluoride residue is separated from the discharged silicon tetrafluoride in a particulate separator.

9. A process as set forth in any one of claims 1 to 8 wherein the reaction chamber is maintained at an absolute pressure of less than 1 bar.

10. A process as set forth in any one of claims 1 to 9 wherein the reaction chamber is maintained at an absolute pressure of from 0.001 bar to 0.1 bar.

11. A process as set forth in any one of claims 1 to 10 wherein the fluorosilicate is dried prior to introduction into the reaction chamber.

12. A process as set forth in any one of claims 1 to 11 wherein the fluorosilicate decomposes to produce a solid residue of an alkali or alkaline earth-metal fluoride and wherein the process further comprises:
discharging fluoride residue from the reaction chamber;
reacting the fluoride residue with fluorosilicic acid to produce an alkali or alkaline earth-metal fluorosilicate; and
introducing the alkali or alkaline earth-metal fluorosilicate into the reaction chamber.

13. A system for preparing silicon tetrafluoride by the thermal decomposition of an alkali or alkaline earth-metal fluorosilicate, the system comprising:
a fluidized bed reactor of the bubbling bed type comprising a reaction chamber for thermal decomposition of fluorosilicate into silicon tetrafluoride gas and an alkali or alkaline earth-metal fluoride;
a heater apparatus in thermal communication with the reaction chamber; and
an exhaust gas treatment system for treating gases discharged from the fluidized bed reactor, the exhaust gas treatment system comprising a particulate separator in fluid communication with the fluidized bed reactor for removing alkali or alkaline earth-metal fluoride from the gases discharged from the fluidized bed reactor.

14. A system as set forth in claim 13 wherein the system comprises a drying apparatus for removing moisture from a fluorosilicate feed.

15. A system as set forth in claim 14 wherein the system comprises an effluent gas treatment system for treating gases discharged from the drying apparatus, the effluent gas treatment system comprising:
a particulate separator in fluid communication with the drying apparatus for separating fluorosilicate dust from the gases discharged from the drying apparatus; and
a vapor separator for condensing water vapor from the gases discharged from the drying apparatus.

## Patentansprüche

1. Ein Verfahren zur Herstellung von Siliciumtetrafluorid mittels der thermischen Zersetzung eines Alkali- oder Erdalkalimetall-Fluorsilikats in einem Wirbelschichtreaktor des stationären Typs, wobei der Wirbelschichtreaktor eine Reaktionskammer besitzt, das Verfahren umfassend:
Einbringen von Fluorsilikat und ein fluides Medium in die Reaktionskammer;
Suspendieren des Fluorsilikats in dem fluiden Medium innerhalb der Reaktionskammer;
Halten der Temperatur der Reaktionskammer auf über 400°C, so dass das Fluorsilikat thermisch zersetzt und Siliciumtetrafluorid gebildet wird; und
Ableiten von Siliciumtetrafluorid aus der Reaktionskammer.

2. Ein Verfahren gemäß Anspruch 1, worin das fluide Medium Siliciumtetrafluorid-Gas enthält.

3. Ein Verfahren gemäß Anspruch 1 oder Anspruch 2, worin ein Teil des abgeleiteten Siliciumtetrafluorid-Gases in die Reaktionskammer eingebracht wird, um Fluorsilikat in der Reaktionskammer zu suspendieren.

4. Ein Verfahren gemäß irgendeinem der Ansprüche 1 bis 3, worin das Fluorsilikat sich zersetzt, so dass ein Alkali- oder Erdalkalimetallfluorid gebildet wird.

5. Ein Verfahren gemäß Anspruch 4, worin die Temperatur der Reaktionskammer auf unterhalb der Schmelztemperatur des Alkali- oder Erdalkalimetallfluorids gehalten wird.

6. Ein Verfahren gemäß irgendeinem der Ansprüche 1 bis 5, worin das Fluorsilikat ein Pulver mit Pulverpartikeln ist, wobei der nominelle Durchschnittsdurchmesser der Pulverpartikel von 25 µm bis 500 µm beträgt.

7. Ein Verfahren gemäß Anspruch 6, worin die Fluorsilikat-Pulverpartikel sich zersetzen, so dass Siliciumtetrafluorid-Gas und ein fester Rückstand aus Alkali- oder Erdalkalimetallfluorid gebildet wird, und worin der Fluorid-Rückstand aus der Reaktionskammer entfernt wird, wobei der durchschnittliche zeitliche Abstand zwischen dem Einbringen eines Fluorsilikat-Pulverpartikels in die Reaktionskammer und dem Entfernen des entsprechenden Fluorid-Rückstands von 5 Minuten bis 50 Minuten beträgt.

8. Ein Verfahren gemäß Anspruch 7, worin der Fluorid-Rückstand zusammen mit dem Siliciumtetrafluorid, das aus der Reaktionskammer abgeleitet wird, aus der Reaktionskammer entfernt wird, und worin der Fluorid-Rückstand in einem Partikelseparator von dem abgeleiteten Siliciumtetrafluorid abgetrennt wird.

9. A Ein Verfahren gemäß irgendeinem der Ansprüche 1 bis 8, worin die Reaktionskammer auf einem absoluten Druck von weniger als 1 bar gehalten wird.

10. Ein Verfahren gemäß irgendeinem der Ansprüche 1 bis 9, worin die Reaktionskammer auf einem absoluten Druck von 0,001 bar bis 0,1 bar gehalten wird.

11. Ein Verfahren gemäß irgendeinem der Ansprüche 1 bis 10, worin das Fluorsilikat vor dem Einbringen in die Reaktionskammer getrocknet wird.

12. Ein Verfahren gemäß irgendeinem der Ansprüche 1 bis 11, worin das Fluorsilikat sich zersetzt, so dass ein fester Rückstand eines Alkali- oder Erdalkalimetallfluorids gebildet wird, und worin das Verfahren des Weiteren umfasst:
Entfernen von Fluorid-Rückstand aus der Reaktionskammer;
Reaktion des Fluorid-Rückstands mit Fluorkieselsäure, so dass ein Alkali- oder Erdalkalimetall-Fluorsilikat gebildet wird; und
Einbringen des Alkali- oder Erdalkalimetall-Fluorsilikats in die Reaktionskammer.

13. Ein System zur Herstellung von Siliciumtetrafluorid durch die thermische Zersetzung eines Alkali- oder Erdalkalimetall-Fluorsilikats, das System umfassend:
einen Wirbelschichtreaktor des stationären Typs, umfassend eine Reaktionskammer zur thermischen Zersetzung von Fluorsilikat in Siliciumtetrafluorid-Gas und ein Alkali- oder Erdalkalimetallfluorid;
ein Heizgerät, das in thermischem Kontakt mit der Reaktionskammer steht; und
ein System zur Behandlung von Abgas, um Gase zu behandeln, welche aus dem Wirbelschichtreaktor abgegeben werden, wobei das Abgasbehandlungs-System einen Partikelseparator umfasst, der in fluidem Kontakt mit dem Wirbelschichtreaktor steht, um Alkali- oder Erdalkalimetallfluorid aus den Gasen zu entfernen, welche aus dem Wirbelschichtreaktor abgegeben werden.

14. Ein System gemäß Anspruch 13, wobei das System ein Trocknungsgerät umfasst, um Feuchtigkeit aus einem Fluorsilikat-Zustrom zu entfernen.

15. Ein System gemäß Anspruch 14, wobei das System ein System zur Behandlung von Abgas umfasst, um Gase zu behandeln, welche aus dem Trocknungsgerät abgegeben werden, wobei das Abgasbehandlungs-System umfasst:
einen Partikelseparator, der in fluidem Kontakt mit dem Trocknungsgerät steht, um Fluorsilikat-Staub aus den Gasen zu entfernen, welche aus dem Trocknungsgerät abgegeben werden; und
einen Dampfabscheider, um Wasserdampf aus dem Gasen zu kondensieren, welche aus dem Trocknungsgerät abgegeben werden.

## Revendications

1. Procédé de préparation de tétrafluorure de silicium par la décomposition thermique d'un fluorosilicate alcalin ou alcalino-terreux dans un réacteur à lit fluidifié du type à lit gazeux, le réacteur à lit fluidifié comportant une chambre à réaction, le processus comprenant :
d'introduire du fluorosilicate et un support de fluide dans la chambre à réaction,
de mettre le fluorosilicate en suspension dans le support de fluide dans la chambre à réaction,
de conserver la température de la chambre à réaction au-dessus de 400 °C pour décomposer thermiquement le fluorosilicate et produire du tétrafluorure de silicium, et
d'évacuer le tétrafluorure de silicium de la chambre à réaction.

2. Procédé comme défini dans la revendication 1, dans lequel le support de fluide comprend un gaz de tétrafluorure de silicium.

3. Procédé comme défini dans la revendication 1 ou la revendication 2, dans lequel une partie du tétrafluorure de silicium évacué est introduite dans la chambre à réaction pour mettre du fluorosilicate en suspension dans la chambre à réaction.

4. Procédé comme défini dans l'une quelconque des revendications 1 à 3, dans lequel le fluorosilicate se décompose pour produire un fluorure alcalin ou alcalino-terreux.

5. Procédé comme défini dans la revendication 4, dans lequel la chambre à réaction est conservée au-dessous de la température de fusion du fluorure alcalin ou alcalino-terreux.

6. Procédé comme défini dans l'une quelconque des revendications 1 à 5, dans lequel le fluorosilicate est une poudre comprenant des particules de poudre, le diamètre nominal moyen des particules de poudre étant compris entre 25 µm et 500 µm.

7. Procédé comme défini dans la revendication 6, dans lequel les particules de poudre de fluorosilicate se décomposent pour produire du gaz de tétrafluorure de silicium et un résidu solide de fluorure alcalin ou alcalino-terreux, les résidus de fluorure étant évacués de la chambre à réaction, la période de temps moyenne entre l'introduction d'une particule de poudre de fluorosilicate dans la chambre à réaction et l'évacuation du résidu de fluorure correspondant étant de 5 minutes à 50 minutes.

8. Procédé comme défini dans la revendication 7, dans lequel le résidu de fluorure est évacué de la chambre à réaction avec le tétrafluorure de silicium évacué de la chambre à réaction et dans lequel le résidu de fluorure est séparé du tétrafluorure de silicium évacué dans un séparateur particulier.

9. Procédé selon l'une quelconque des revendications 1 à 8, dans lequel la chambre à réaction est conservée à une pression absolue inférieure à un bar.

10. Procédé selon l'une quelconque des revendications 1 à 9, dans lequel la chambre à réaction est conservée à une pression absolue comprise entre 0,001 bar et 0,1 bar.

11. Procédé selon l'une quelconque des revendications 1 à 10, dans lequel le fluorosilicate est séché avant son introduction dans la chambre à réaction.

12. Procédé comme défini dans l'une quelconque des revendications 1 à 11, dans lequel le fluorosilicate se décompose pour produire un résidu solide d'un fluorure alcalin ou alcalino-terreux et dans lequel le procédé comprend en outre :
d'évacuer le résidu de fluorure de la chambre à réaction,
de faire réagir le résidu de fluorure avec un acide fluorosilique afin de produire un fluorosilicate alcalin ou alcalino-terreux, et
d'introduire le fluorosilicate alcalin ou alcalino-terreux dans la chambre à réaction.

13. Système de préparation de tétrafluorure de silicium par la décomposition thermique d'un fluorosilicate alcalin ou alcalino-terreux, le système comprenant :
un réacteur à lit fluidifié du type à lit gazeux comportant une chambre à réaction en vue de la décomposition thermique de fluorosilicate dans un gaz de tétrafluorure de silicium et un fluorure alcalin ou alcalino-terreux,
un appareil chauffant en communication thermique avec la chambre à réaction, et
un système de traitement de gaz d'échappement pour traiter des gaz évacués du réacteur à lit fluidifié, le système de traitement de gaz d'échappement comprenant un séparateur particulier en communication fluidique avec le réacteur à lit fluidifié pour éliminer le fluorure alcalin ou alcalino-terreux des gaz évacués du réacteur à lit fluidifié.

14. Système comme défini dans la revendication 13, dans lequel le système comprend un appareil de séchage pour éliminer l'humidité d'une alimentation en fluorosilicate.

15. Système comme défini la revendication 14, dans lequel le système comprend un système de traitement d'effluent gazeux pour traiter des gaz évacués de l'appareil de séchage, le système de traitement d'effluent gazeux comprenant :
un séparateur particulier en communication fluidique avec l'appareil de séchage pour séparer de la poussière de fluorosilicate des gaz évacués de l'appareil de séchage, et
un séparateur de vapeur pour condenser de la vapeur d'eau à partir des gaz évacués de l'appareil de séchage.
